# EUROPÄISCHE PATENTSCHRIFT

(11) **EP 2 150 732 B1**
(45) Veröffentlichungstag und Bekanntmachung des Hinweises auf die Patenterteilung: **21.11.2012**
(21) Anmeldenummer: 08706830.0
(22) Anmeldetag: 30.01.2008
(51) Int. Cl.: F16J 9/26, F16J 9/20

(54) **KOLBENRING**
PISTON RING
SEGMENT DE PISTON

(30) Priorität: 17.02.2007 DE 102007007963
(43) Veröffentlichungstag der Anmeldung: 10.02.2010
(73) Patentinhaber: Federal-Mogul Burscheid GmbH, 51399 Burscheid (DE)
(72) Erfinder: ESSER, Johannes, 51519 Odenthal (DE); MÜNCHOW, Frank, 42929 Wermelskirchen (DE)
(74) Vertreter: Döpp, Ludger
(86) Internationale Anmeldenummer: PCT/DE2008/000164
(87) Internationale Veröffentlichungsnummer: WO 2008/098548

(56) Entgegenhaltungen:
- EP-A- 0 905 420
- EP-A- 1 460 318
- WO-A-2005/121609
- WO-A1-03/070999
- DE-A1- 4 005 200
- US-A- 4 214 762

## Beschreibung

Die Erfindung betrifft einen Kolbenring gemäß gattungsbildendem Teil des ersten Patentanspruchs.

In der EP 1 460 318 A1 wird eine Kolbenringbeschichtung beschrieben, bei welcher zumindest die untere Flankenfläche mit einem speziellen Polymer beschichtet ist.

In der EP 0 905 420 A2 wird ein Kolbenring beschrieben, der im Bereich mindestens einer seiner Flanken mit einer harten Beschichtung versehen ist. Bevorzugt kommt eine so genannte PVD-DLC-(Diamond like carbon) Schicht zum Einsatz, in welcher eines oder mehrere der Elemente Silizium, Titan, Wolfram, Chrom, Molybdän, Niob und Vanadium eingebracht sind.

Durch die DE 40 05 200 A1 ist ein Kolbenring mit verchromter Lauffläche bekannt geworden, wobei die untere Ringflanke bis zu einem Abstand von 20 bis 50 % der gesamten Ringbreite, von der Lauffläche aus gerechnet, verchromt ist.

Ein anderes Beispiel ist in der WO 03/070999 A1 offenbart.

Kolbenringe führen in der Nut des Kolbens radiale und axiale Bewegungen aus. Diese Bewegungen führen unter anderem zum Verschleiß der Ringflanken. Unter normalen Belastungen kann man dem Verschleiß durch geeignete Werkstoffauswahl des Kolbenringes entgegenwirken. In modernen Brennkraftmaschinen steigt durch immer höhere Leistungsausbeuten die Beanspruchung für die Ringe immer weiter an, so dass ein alleiniger Schutz der jeweiligen Flanke durch den Grundwerkstoff nicht mehr gewährleistet werden kann. Für diese Fälle ist eine gesonderte Verschleißschutzschicht an der Flanke notwendig. Ein besonderes Problem stellt das so genannte microwelding als eine spezielle Verschleißform an Kolbenringflanken dar. Dieses Phänomen tritt vielfach in Ottomotoren bei Einsatz von Stahlringen auf.

Bekannte Verfahren gegen Ringflankenverschleiß sind das Nitrieren der Ringflanke(n) von Stahlringen oder die dünne Verchromung der Flanken, wobei das Nitrieren, wie bereits angesprochen, bei Auftreten von microwelding nicht geeignet ist. Um jedoch weiter an den Vorteilen nitrierter Stahlringe festhalten zu können, müssen hier besondere Schutzmaßnahmen getroffen werden.

Der Erfindung liegt die Aufgabe zugrunde, eine Beschichtung für die Ringflanken von Kolbenringen bereit zu stellen, die einerseits einen Schutz gegen makroskopischen Verschleiß bietet und andererseits dem microwelding entgegenwirkt. Darüber hinaus soll die Beschichtung eine gute Verträglichkeit mit dem Kolbenwerkstoff, respektive dem eingesetzten Ringträger, aufweisen.

Diese Aufgabe wird dadurch gelöst, dass die zumindest eine Flankenfläche vollständig mit einer PVD-Deckschicht versehen ist, wobei sich die Schichtdicke der PVD-Deckschicht radial von der äußeren Lauffläche zur inneren Umfangsfläche verjüngt.

Vorteilhafte Weiterbildungen des Erfindungsgegenstandes sind den Unteransprüchen zu entnehmen.

Der Erfindungsgegenstand ist einsetzbar sowohl bei im Querschnitt rechteckigen als auch bei ein- oder beidseitig trapezförmig ausgebildeten Kolbenringen.

Bei der PVD-Beschichtung (Physical Vapour Deposition) handelt es sich um ein Verfahren, bei dem die Beschichtung der Flankenfläche(n) des Kolbenringes durch Abscheidung aus der Dampfphase erfolgt. Das abzuscheidende Beschichtungsmaterial liegt dabei als ionisierter Teilchenstrom vor.

Als Beschichtungen kommen bei Forderung nach einem Verschleißschutz chrombasierte Nidridschichten, wie zum Beispiel CrN-oder CrON-Schichten bevorzugt zum Einsatz. Weiterent wicklangen, in Form von mehrlagigen oder Multilager-Schichtem, sind jedoch ebenfalls als PVD-Deckschichten geeignet.

Je nach Einsatz und Querschnitt des Kolbenringes können unter Berücksichtigung der motortechnischen Erfordernisse entweder nur die untere Flankenfläche oder auch beide Flankenflächen mit der PVD-Beschichtung versehen werden.

Des Weiteren besteht die Möglichkeit, dass die PVD-Schicht auf Basis eines Nitrids der Elemente der Gruppe IV b bis VI b des Periodensystems gebildet wird. Dies kann wahlweise mit oder ohne Zusatz der Elemente Al, Si, C oder O erfolgen.

Von besonderem Vorteil ist, dass die durch das PVD-Verfahren aufgebrachte Verschleißschutzschicht dergestalt ausgebildet wird, dass sie in der Nähe des Außendurchmessers eine Dicke zwischen 8 und 20 µm aufweist, und dass die Schichtdicke zum Innendurchmesser hin kontinuierlich abnimmt, wobei dort eine Dicke im Bereich zwischen 2 und 10 µm gegeben ist. Durch diese Maßnahme wird ein häufig beobachtetes Verschleißbild an Kolbenringen in der Nähe des Ringaußendurchmessers überwunden.

Von besonderem Vorteil sind so genannte PVD-DLC (diamond-like-carbon)-Beschichtungen, die auf die Flankenfläche(n) von Kolbenringen aufgebracht werden. Sie bilden besonders verschleißfeste Oberflächen mit niedrigem Reibungskoeffizienten. DLC-Schichten weisen darüber hinaus eine gute Haftung auf dem Grundkörper und eine hohe Bruchfestigkeit auf

Einem weiteren Gedanken der Erfindung gemäß, wird bei Notwendigkeit eines zusätzlichen Schutzes gegen microwelding auf nitrierten Stahlringen eine PVD-DLC-Beschichtung verwendet, die bedarfsweise noch dünner als die angesprochene PVD-Beschichtung ausgebildet werden kann.

Von besonderer Bedeutung ist, dass eine Flankenbeschichtung wirtschaftlich herstellbar sein muss, was bedeutet, dass an der beschichteten Flanke keine weitere mechanische Bearbeitung stattfinden soll. Da sich PVD-Beschichtungen sehr dünn und gleichmäßig abscheiden, wird dieses Kriterium durch diese Art der Beschichtung erfüllt.

Der Erfindungsgegenstand ist anhand eines Ausführungsbeispiels in der Zeichnung dargestellt und wird wie folgt beschrieben. Es zeigen:
- Figur 1: Kolbenring mit rechteckigem Querschnitt, der zumindest im Bereich seiner Flanken mit einer Verschleißschutzschicht versehen ist;
- Figur 2: einseitig trapezförmig ausgebildeter Kolbenring, der zumindest im Bereich seiner Flanken mit einer Verschleißschutzschicht versehen ist;
- Figur 3: Variante zu Figur 1, wobei die Flanken mit einer andersartigen Verschleißschutzschicht versehen sind.

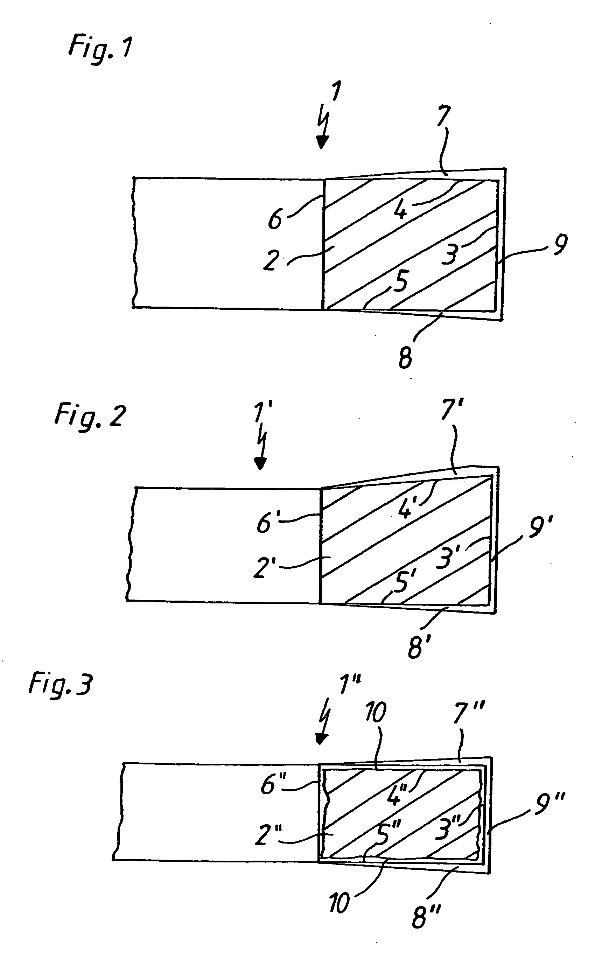

Figur 1 zeigt einen Kolbenring 1, der einen Grundkörper 2 mit rechteckigem Querschnitt aufweist. Der Kolbenring 1 beinhaltet eine Lauffläche 3, eine obere 4 und eine untere Flankenfläche 5 sowie eine innere Umfangsfläche 6. Die obere 4 und die untere Flankenfläche 5 ist in diesem Beispiel jeweils mit einer PVD-Deckschicht 7,8 versehen, die in diesem Beispiel auf Basis von CrN ausgebildet ist. Je nach Anforderung kann es unter Umständen ausreichen, lediglich die kritische untere Flankenfläche 5 oder obere Flankenfläche 4 mit einer entsprechenden PVD-Deckschicht 8,7 zu versehen. Die jeweilige PVD-Deckschicht 7,8 ist hierbei so ausgestaltet, dass sie im Bereich der Lauffläche 3 ihre größte Schichtdicke, z. B. 15 µm hat, die sich in Richtung der inneren Umfangsfläche 6 kontinuierlich bis auf eine Schichtdicke von 4 µm reduziert. Durch diese Maßnahme wird einem häufig beobachteten Verschleißbild entgegengewirkt, da es häufig im Bereich der äußeren Umfangsfläche des Kolbenringes 1 zu erhöhtem Flankenverschleiß kommt. Die Lauffläche 3 kann bedarfsweise ebenfalls mit einer PVD-Deckschicht 9 in gleicher oder anderer Ausführungsform beschichtet werden. Ebenfalls denkbar sind PVD-Deckschichten auf Basis von CrON. Der Fachmann wird in Abhängigkeit vom jeweiligen Anwendungsfall die geeignete Beschichtung sowie die Schichtdicke vorgeben.

Figur 2 zeigt eine Alternative zu Figur 1. Dargestellt ist ein Kolbenring 1' mit einem Grundkörper 2', der in diesem Beispiel im Bereich seiner oberen Flankenfläche 4' trapezförmig ausgebildet ist, während die untere Flankenfläche 5' geradlinig verläuft. In Analogie zu Figur 1 sind im Bereich beider Flankenflächen 4',5' PVD-Deckschichten 7',8', beispielsweise auf Basis von CrON, abgeschieden, wobei auch hier eine Verjüngung der jeweiligen PVD-Deckschicht 7',8', ausgehend von der Lauffläche 3' hin zur inneren Umfangsfläche 6' gegeben ist. Die Lauffläche 3' kann ebenfalls mit einer PVD-Deckschicht 9' versehen werden.

Figur 3 zeigt eine weitere Alternative zu Figur 1. Der hier dargestellte Kolbenring 1" weist wiederum einen rechteckigen Grundkörper 2" auf. In diesem Beispiel ist der gesamte Ringquerschnitt des Grundkörpers 2" mit einer als Nitrierschicht 10 ausgebildeten Verschleißschutzschicht mit einer Schichtdicke von 20 µm versehen. Auf dieser Nitrierschicht 10 ist in Analogie zu den Figuren 1 und 2 eine PVD-Deckschicht 7",8" abgeschieden, die sich schichtdickenmäßig, ausgehend von der Lauffläche 3", hin zur inneren Umfangsfläche 6" kontinuierlich verjungt. Ebenfalls kann auf der Lauffläche 3" eine PVD-Deckschicht 9" vorgesehen werden.

## Patentansprüche

1. Kolbenring, mit einem Grundkörper (2,2',2"), der eine Lauffläche (3,3',3"), eine obere (4,4',4") und eine untere Flankenfläche (5,5',5") sowie eine innere Umfangsfläche (6,6',6") aufweist, wobei zumindest eine der Flankenflächen (4",5") mit einer PVD-Deckschicht (7",8") versehen ist, wobei die PVD-Deckschicht auf Basis von CrN und/oder CrON ausgebildet ist, **dadurch gekennzeichnet, dass** die zumindest eine Flankenfläche (4",5") vollständig mit einer PVD-Deckschicht (7",8") versehen ist, wobei sich die Schichtdicke der PVD-Deckschicht (7",8") radial von der äußeren Lauffläche zur inneren Umfangsfläche kontinuierlich verjüngt.

2. Kolbenring nach Anspruch 1, **dadurch gekennzeichnet, dass** zumindest die untere Flankenfläche (5") mit einer durch Nitrieren erzeugten Verschleißschutzschicht (10) versehen wird, auf welcher die PVD-Deckschicht (7",8") abgeschieden ist.

3. Kolbenring nach Anspruch 2, **dadurch gekennzeichnet, dass** die Verschleißschutzschicht (10) eine Schichtdicke von 5 bis 50 µm aufweist.

4. Kolbenring nach einem der Ansprüche 1 bis 3, **dadurch gekennzeichnet, dass** die PVD-Deckschicht (7,7',7";8,8',8") eine Dicke von 0,5 bis 20 µm aufweist.

5. Kolbenring nach einem der Ansprüche 1 bis 4, **dadurch gekennzeichnet, dass** die PVD-Schicht (7,8,7',8', 7",8") auf Basis von Nitrid der Elemente der Gruppe IV b bis VI b des Periodensystems mit bzw. ohne Zusatz von Al und/oder Si und/oder C und/oder O besteht.

6. Kolbenring nach einem der Ansprüche 1 bis 5, **dadurch gekennzeichnet, dass** die PVD-Deckschicht (7,7',7";8,8',8") als reibungs- und verschleißarme PVD-DLC (diamond-like-carbon)-Schicht ausgebildet ist.

7. Kolbenring nach einem der Ansprüche 1 bis 6, **dadurch gekennzeichnet, dass** die Schichtdicke der PVD-Deckschicht (7,7',7";8,8',8") in der Nähe der Lauffläche (3,3',3") etwa 3 bis 20 µm beträgt und sich in Richtung der inneren Umfangsfläche (6,6',6") auf 1 bis 10 µm reduziert.

8. Kolbenring nach einem der Ansprüche 1 bis 7, **dadurch gekennzeichnet, dass** sich zumindest eine der Flankenflächen (4') des Grundkörpers (2') zumindest einseitig trapezförmig von außen nach innen verjüngt, und dass auf dieser Flankenfläche (4') zumindest die PVD-Deckschicht (7'), insbesondere die PVD-DLC-Schicht abgeschieden ist.

9. Kolbenring nach einem der Ansprüche 1 bis 8, **dadurch gekennzeichnet, dass** der Grundkörper im Querschnitt beidseitig trapezförmig ausgebildet und zumindest eine der Flankenflächen (4".5") zumindest mit der PVD-Deckschicht (7",8"), insbesondere der PVD-DLC-Schicht, versehen ist.

## Claims

1. A piston ring comprising a base body (2, 2', 2") which comprises a bearing surface (3, 3', 3"), an upper (4, 4', 4") and a lower flank surface (5, 5', 5") as well as an inner circumferential surface (6, 6', 6"), wherein at least one of the flank surfaces (4", 5") is provided with a polyvinylidene (PVD) cover layer (7", 8"), wherein the PVD cover layer is formed on the base of CrN and/or CrON, **characterized in that** the at least one flank surface (4", 5") is completely provided with a PVD cover layer (7", 8"), wherein the layer thickness of the PVD cover layer (7", 8") continuously decreases in a radial manner from the outer bearing surface towards the inner circumferential surface.

2. A piston ring according to claim 1, **characterized in that** at least the lower flank surface (5") is provided with a protection layer against wear (10) generated by nitration, on which the PVD cover layer (7", 8") is deposited.

3. A piston ring according to claim 2, **characterized in that** the protection layer against wear (10) comprises a layer thickness comprised between 5 and 50 µm.

4. A piston ring according to one of the claims 1 through 3, **characterized in that** the PVD cover layer (7, 7', 7"; 8, 8', 8") comprises a thickness comprised between 0.5 and 20 µm.

5. A piston ring according to one of the claims 1 through 4, **characterized in that** the PVD layer (7, 8, 7', 8', 7", 8") is formed on the base of nitrides of the elements belonging to the groups IV b through VI b of the classification of elements with or without addition of Al and/or Si and/or C and/or O.

6. A piston ring according to one of the claims 1 through 5, **characterized in that** the PVD cover layer (7, 7', 7"; 8, 8', 8") is a polyvinylidene diamond-like-carbon (PVD-DLC) layer with low friction and low wear.

7. A piston ring according to one of the claims 1 through 6, **characterized in that** the layer thickness of the PVD cover layer (7, 7', 7"; 8, 8', 8") in the vicinity of the bearing surface (3, 3', 3") is comprised between about 3 and 20 µm and decreases in the direction of the inner circumferential surface (6, 6', 6") to between 1 and 10 µm.

8. A piston ring according to one of the claims 1 through 7, **characterized in that** at least one of the flank surfaces (4') of the base body (2') tapers in form of a trapezium from outside towards inside at least on one side and that at least the PVD cover layer (7'), especially the PVD-DLC layer is deposited on this flank surface (4').

9. A piston ring according to one of the claims 1 through 8, **characterized in that** the cross section on both sides of the base body is trapezoidal and at least one of the flank surfaces (4", 5") is at least provided with the PVD cover layer (7", 8"), especially with the PVD-DLC layer.

## Revendications

1. Segment de piston ayant un corps de base (2, 2', 2") qui comprend une surface de roulement (3, 3', 3"), une surface de flanc supérieure (4, 4', 4") et inférieure (5, 5', 5") ainsi qu'une surface circonférentielle intérieure (6, 6', 6"), au moins une des surfaces de flanc (4", 5") étant munie d'une couche de recouvrement en polyvinylidène (PVD) (7", 8"), la couche de recouvrement en PVD étant formée à base de CrN et/ou de CrON, **caractérisé en ce que** l'au moins une surface de flanc (4", 5") est complètement munie d'une couche de recouvrement en PVD (7", 8"), l'épaisseur de couche de la couche de recouvrement en PVD (7", 8") se diminuant continuellement de manière radiale à partir de la surface de roulement extérieure jusqu'à la surface circonférentielle intérieure.

2. Segment de piston selon la revendication 1, **caractérisé en ce qu'**au moins la surface de flanc inférieure (5") est munie d'une couche de résistance à l'usure (10) générée par nitrification sur laquelle est déposée la couche de recouvrement en PVD (7", 8").

3. Segment de piston selon la revendication 2, **caractérisé en ce que** la couche de résistance à l'usure (10) comprend une épaisseur de couche comprise entre 5 et 50 µm.

4. Segment de piston selon l'une des revendications 1 à 3, **caractérisé en ce que** la couche de recouvrement en PVD (7, 7', 7" ; 8, 8', 8") comprend une épaisseur comprise entre 0,5 et 20 µm.

5. Segment de piston selon l'une des revendications 1 à 4, **caractérisé en ce que** la couche en PVD (7, 8, 7', 8', 7", 8") est formée à base de nitrures des éléments des groupes IV b à VI b de la classification périodique des éléments avec ou sans addition de Al et/ou de Si et/ou de C et/ou de O.

6. Segment de piston selon l'une des revendications 1 à 5, **caractérisé en ce que** la couche de recouvrement en PVD (7, 7', 7" ; 8, 8', 8") est une couche en PVD et en DLC (diamond-like-carbon) à faible friction et à faible usure.

7. Segment de piston selon l'une des revendications 1 à 6, **caractérisé en ce que** l'épaisseur de couche de la couche de recouvrement en PVD (7, 7', 7" ; 8, 8', 8") à la proximité de la surface de roulement (3, 3', 3") est comprise entre environ 3 et 20 µm et se diminue dans la direction de la surface circonférentielle intérieure (6, 6', 6") jusqu'à 1 à 10 µm.

8. Segment de piston selon l'une des revendications 1 à 7, **caractérisé en ce qu'**au moins l'une des surfaces de flanc (4') du corps de base (2') s'effile de manière trapézoîdale de l'extérieur vers l'intérieur, au moins d'un côté, et **en ce qu'**au moins la couche de recouvrement en PVD (7'), notamment la couche en PVD-DLC, est déposée sur cette surface de flanc (4').

9. Segment de piston selon l'une des revendications 1 à 8, **caractérisé en ce que** la section transversale du corps de base est trapézoïdale des deux côtés et au moins une des surfaces de flanc (4", 5") est munie d'au moins la couche de recouvrement en PVD (7", 8"), notamment de la couche en PVD-DLC.
